# EUROPÄISCHE PATENTSCHRIFT

(11) **EP 2 555 366 B1**
(45) Veröffentlichungstag und Bekanntmachung des Hinweises auf die Patenterteilung: **15.07.2015**
(21) Anmeldenummer: 12005660.1
(22) Anmeldetag: 03.08.2012
(51) Int. Cl.: H02G 9/12, H02G 15/06, H02G 15/14

(54) **Abfangvorrichtung, vorzugsweise für Starkstromkabel**
Capture device, in particular for high voltage cable
Dispositif d'interception, de préférence pour câble haute tension

(30) Priorität: 03.08.2011 DE 102011109328
(43) Veröffentlichungstag der Anmeldung: 06.02.2013
(73) Patentinhaber: nkt cables GmbH & Co. KG, 51061 Köln (DE)
(72) Erfinder: Römelt, Simon-Patrick, 50679 Köln (DE); Steiner, Frank, 58730 Fröndenberg (DE)

(56) Entgegenhaltungen:
- DE-B- 1 042 063
- GB-A- 1 571 679
- GB-A- 2 476 655
- US-A- 2 697 739
- US-A- 3 855 414
- US-A- 4 259 543

## Beschreibung

Die Erfindung betrifft eine Abfangvorrichtung für einen von unten durch eine Öffnung einer waagerechten Plattform hindurchgeführten, mit einer Armierungsschicht ausgebildeten, frei hängenden Gegenstand, insbesondere für ein Starkstromkabel.

Zur temporären Sicherung eines Starkstromkabels bei der Installation oder bei ServiceArbeiten auf einer Plattform (insbesondere an einer Plattform auf See) wird ein Ziehkopf eingesetzt, der an der Armierungsschicht des Starkstromkabels angreift und das Gewicht des hängenden Kabels aufnimmt. Die mechanischen Zugkräfte werden von der Armierungsschicht aufgenommen, wobei möglichst wenig Kräfte auf die innere Kabelstruktur übermittelt werden. Um mögliche mechanische Beanspruchung auf die Kabelstruktur während des Service-Aufenthalts abzufangen, wird das Starkstromkabel mittels einer temporären oder einer permanenten Kabelabfangvorrichtung (englisch 'hang-off') fixiert.

Die DE 1042063 B beschreibt eine Abfangvorrichtung für ein Überseekabel mit einer großen Anzahl von Einzelsegmenten. Die Vorrichtung hat das Ziel, alle Bewehrungsdrähte möglichst mit derselben Zugbeanspruchung zu klemmen. Daher besteht der Aufbau aus vielen Einzelteilen und der Zusammenbau ist demgemäss sehr aufwändig.

Die Schrift US 2006-0193572 A1 zeigt eine Abfangvorrichtung für ein von unten durch eine Öffnung hindurchgeführtes Datenkabel mit Klemmmittel für eine Armierungsschicht und Abstützmittel zum Abstützen der Vorrichtung auf einer Plattform. Nähere Einzelheiten sind aus der Schrift nicht entnehmbar.

In einer bekannten Anordnung werden die Armierungsdrähte konisch aufgeweitet und über einen Ring umgebogen. Das Umbiegen erfolgt von dem größeren Durchmesser der Aufweitung nach innen hin in Richtung auf die Kabeloberfläche. Die Armierungsdrähte werden schließlich zwischen zwei jeweils konisch und zueinander passenden Klemmmitteln und einer Deckplatte permanent verklemmt und damit das Kabel mechanisch gesichert (US 2010-0314151 A1).

Eng das Kabel umfassende und in der Regel aus Stahl bestehende Klemm- und Abfangmittel liefern den Nachteil, dass im Betrieb des Kabels Magnetverluste auftreten, die zu Leistungsverlusten und zur thermischen Belastung des Kabels im Bereich der Abfangung führen. Es sind Abdichtungsanordnungen veröffentlicht für den Übergang eines Elektrokabels in ein unter Wasser gelegenes Apparategehäuse. Ein erstes Beispiel zeigt die GB 1571679 A, bei dem eine oder zwei Schichten von Armierungselemente eingesetzt werden. Ein anderes Beispiel ist aus der DE 832009 B bekannt.

Vorgenannte Anordnungen dienen der Abdichtung gegen einen jeweils herrschenden Druck unter Wasser. Die Zugentlastung oder Abfangung des Kabelgewichts wird mit vielen Einzelteilen erreicht, die miteinander fixiert werden. Das Lösen der Abfangung, bzw. die Demontage des Elektrokabels in den letztgenannten Anordnungen ist äußerst umständlich, wenn überhaupt nur schwer möglich.

Eine dritte Abdichtungsanordnung wird in der US 4 259 543 A beschrieben, wo ein Kabelabschluss zwischen einer koaxialen Signalleitung und einem in einem Gehäuse untergebrachten Apparat dargestellt ist. Mit dem Kabelabschluss wird eine elektrische Abschirmung der Signalleitung gegen Signalverluste erreicht. Für Untersee-Kabel weist der Kabelabschluss weiterhin wasserdichtende Eigenschaft auf. Die Signalleitung wird an einer mit Ankerplatte bezeichneten Scheibe befestigt.

In den Anordnungen sind die Armierungselemente von der Innenfläche eines Kernrings kommend zur Außenfläche des Kernrings um den Kernring herumgelegt. Die Klemmung kommt durch die aufgewandten Kräfte bei der Verschraubung der Einzelteile zustande. Eine Kontrolle der Klemmkräfte, um eine übermäßige Verformung der Armierungselemente zu vermeiden, ist nicht vorgesehen.

Werden die Armierungsdrähte am Ort des Eintritts in die Abfangvorrichtung geklemmt, kommt es bei der Klemmung der Drähte zur Verformung des Drahtgefüges und zur Querschnittsverringerung; es tritt dort eine Zugspannungsspitze auf. Die klemmende Aufnahme der Armierungsdrähte unmittelbar am Ort des Eintritts in die Abfangvorrichtung ist eine Schwachstelle und stellt bei derartigen Anordnungen einen Nachteil dar.

Der Erfindung liegt die Aufgabe zugrunde, eine Abfangvorrichtung anzugeben, die Klemmmittel aufweist, jedoch ohne Verschraubungsmittel auskommt. Sie soll weiterhin einfach zu montieren und zu demontieren sein.

Ausgehend von bekannten Abfangvorrichtungen wird die Aufgabe erfindungsgemäß durch die Merkmale des unabhängigen Anspruches gelöst, während den abhängigen Ansprüchen vorteilhafte Weiterbildungen der Erfindung zu entnehmen sind.

Der Kern der Erfindung ist, dass die Abfangvorrichtung nur aus wenigen Einzelteilen besteht, von denen ein Außenring und Abstützmittel mit der Plattform mittelbar oder unmittelbar fest verbunden sind, und ein von Armierungsdrähten umschlungener Innenring allein in Zugrichtung des langgestreckten Gegenstandes in dem Außenring liegend in selbsttätigen Klemmkontakt und in Haltefunktion der Armierungsdrähte mit dem Außenring steht. Es werden keine Schrauben oder ähnliches eingesetzt, die über Werkzeuge angezogen werden müssen. Bei solchen Maßnahmen würde über das Zueinanderrücken von möglichen Klemmmitteln erst eine Klemmwirkung erzielt. Abfangen, Halten und Klemmen des langgestreckten Gegenstandes kommt bei der Erfindung allein durch das Zusammenwirken des relativ lose liegenden Kernrings mit den starr mit der Plattform verbundenen Teilen (Außenring und Abstützmittel) zustande.

Zur Montage eines langgestreckten Gegenstandes wird das Eigengewicht des Gegenstandes von einem (temporären) Haltemittel aufgenommen. Hierbei wird der Gegenstande von unten durch eine Öffnung der Plattform nach oben gezogen und gehalten. Die Armierungsdrähte werden um den Kernring herumgelegt und nach Freigabe des Haltemittels vom Außenring klemmend aufgenommen. Bei der Klemmung geht die volle Zuglast vom Haltemittel auf die Abfangvorrichtung über. Durch die Zugkraft des frei hängenden Gegenstandes werden Kernring und Außenring aufeinander gedrückt. Die Klemmung ist damit zugkraftabhängig.

Zur Demontage eines wird das von der Abfangvorrichtung aufgenommene Gewicht des langgestreckten Gegenstandes von einer (temporären) Einrichtung übernommen und damit die Abfangvorrichtung vom vollen Gewicht entlastet. Die Zuglast ist praktisch Null, wodurch sich die Klemmung zwischen Kernring und Außenring löst. Die Fixierelemente der Anfangvorrichtung können entfernt werden. Das Gewicht des Gegenstandes kann an den nun freiliegenden Armierungsdrähten aufgenommen werden.

Das System passt sich wechselnden Lastbedingungen automatisch an. Die Klemmung ist zuglastabhängig. Der Außenring liegt über die Abstützmittel (Fixiersäulen) in seiner Position fest. Je mehr sich die Zuglast an den Armierungsdrähten erhöht, desto mehr drückt (klemmt) der Kernring die Armierung gegen die Konusinnenfläche des Außenringes und somit erhöht sich die Haltekraft. Sobald die Zuglast gleich bleibt, bleibt auch die Haltekraft gleich. Eine Vorschädigung der Armierungsdrähte durch Aufbringung der Klemmkräfte über Werkzeuge ist ausgeschlossen.

Die Abfangvorrichtung wird für einen von unten durch eine Öffnung einer waagerechten Plattform hindurchgeführten, mit einer Armierungsschicht ausgebildeten langgestreckten Gegenstand vorgeschlagen. Der Gegenstand entwickelt seine Zugkraft durch Eigengewicht senkrecht zur Plattform. Die Abfangvorrichtung umfasst Klemmmittel für die Armierungsschicht und Abstützmittel zum Abstützen der Abfangvorrichtung auf der Plattform. Die Klemmmittel umfassen einen in Umschlingung von Elementen der Armierungsschicht aufnehmenden, den Gegenstand umgebenden Kernring, welcher der Armierungsschicht anliegt, und weiter einen mit der Plattform über Abstützmittel fest verbundenen, den Gegenstand umgebenden Außenring. Der Kernring ist in Zugrichtung des Gegenstandes vom Außenring aufgenommen.

Die Abfangvorrichtung kann mit bevorzugten Ausgestaltungen ausgebildet sein. Die im folgenden genannten Merkmale der Erfindung können einzeln oder gemeinsam auch in verschiedenen Weiterbildungen eingesetzt sein.

Die Ausbildung des Kernrings als Torus, vorzugsweise mit elliptischem Querschnitt ist wesentlich. Die Zuglast (Energie) der Armierungsdrähte baut über die ungleichmäßige Form des Kernringquerschnitts (Kraftabbaukurve durch variierende Krümmungsradien auf dem Kernring) bereits einen Teil seiner Zuglast ab. Die Armierung versucht ihre fixierte Form, von einem großen Krümmungsradius zu einem kleinen Krümmungsradius und wiederum auf einen großen Krümmungsradius zu ändern. Dieses kostet Energie, die der Klemmstelle abzurechnen ist.

Die Innenfläche des Außenrings ist derart ausgebildet, dass der Kernring in Zugrichtung des Gegenstandes in den Außenring einlegbar ist. Das Größtmaß des Kernringdurchmessers ist größer als das Kleinstmaß des Innendurchmessers des Außenrings. Der Kernring kann durch den Außenring nicht hindurchrutschen.

Der Kernring liegt als Torus vor, wodurch seine Außenfläche konvex ausgebildet ist. Insbesondere kann der Torus einen elliptischen Querschnitt aufweisen, wobei die Hauptachse der Ellipse parallel zur Achse des Gegenstands liegt. Als günstiges Verhältnis von Hauptachse der Ellipse zu Nebenachse der Ellipse kann eine Relation zwischen 1,5 : 1 und 2 : 1 gewählt werden, beispielsweise ein Verhältnis von 1,7 : 1. Die Oberfläche des Kernrings kann mit Riefen oder Rillen versehen sein, so dass es zu einer vergrößerten Haftreibung zwischen Armierungsdrähten und Kernring kommt.

Die aus der Armierungsschicht freigelegten Armierungselemente sind über den Kernring herübergelegt und entgegen ihrer ursprünglichen Ausrichtung zurückgelegt. Die Umschlingung der Armierungselemente um den Kernring beträgt mehr als 180°. Die Armierungselemente kommen zwischen einer Außenfläche des Kernrings und einer Innenfläche des Außenrings zu liegen. Die Klemmung entsteht nach Freigabe des temporär getragenen Gegenstands und ist somit zugkraftabhängig.

Die Innenfläche des Außenrings sollte schalenartig zu Aufnahme des Kernrings ausgebildet sein, wobei bevorzugt die Innenfläche des Außenrings sich konisch erweiternd in Richtung auf das oberhalb der Plattform befindliche Ende des Gegenstandes ausgebildet ist. Die konische Aufweitung sollte in einem Winkelbereich von 6° bis 12° liegen. Hierbei ist der zwischen den Mantellinien des Konus liegende halbe Winkel gemeint.

Der Außenring sollte Bohrungen zur Schraubbefestigung mit den Abstützmitteln aufweisen.

Kernring und Außenring sind aus mindestens zwei gleichen Segment-Elementen gebildet. Die jeweiligen Ringe werden von außen um den langgestreckten Gegenstand herumgelegt, wobei sie nicht als Vollring ausgebildet sein können, sondern aus Teilen des jeweiligen Rings, vorzugsweise nämlich aus identischen Segment-Elementen. Bei einer dreiteiligen Ausbildung der Segment-Elemente umfassen die Elemente jeweils einen Kreissektor von 120°. Die Segment-Elemente des Kernrings bestehen vorzugsweise aus drei Ringelemente mit elliptischem Querschnitt. Diese Ringelemente werden über drei Unterschraubelemente verbunden, wodurch ein voller Ring entsteht, dessen Korpus den elliptischen Querschnitt aufweist, und wobei die Hauptachse der Ellipse parallel zur Achse des langgestreckten Gegenstandes liegt.

Die Segment-Elemente des Außenrings bestehen vorzugsweise aus drei Ringsegmente, die über Flansche gegeneinander verschraubbar sind.

Die Abfangvorrichtung kann unmittelbar im Bereich einer Plattformöffnung auf der Plattform aufgeständert und befestigt sein. Vorzugsweise kann auf der Öffnung der Plattform eine mit einer Bohrung für den Durchtritt des Gegenstandes versehene Grundplatte befestigt sein. Die Grundplatte sollte Bohrungen für die Schraubbefestigung mit den Abstützmitteln aufweisen.

Die Abstützmittel können in Form mehrerer Fixiersäulen oder in Form von teilzylindrischen Fixierplatten oder Fixierschalen ausgebildet sein. Die Abstützmittel haben vorzugsweise fußseitig und kopfseitig Bohrungen zur Aufnahme von Schrauben zur Verschraubung mit der Plattform, bzw. mit der Grundplatte und zur Aufnahme von Schrauben zur Verschraubung mit dem Außenring.

Durch die Klemmung der Armierungsdrähte kommt auch eine leitende Anbindung zum Masse-Potential zustande.

Die vorliegende Erfindung ist nicht auf die vorstehend beschriebenen Ausführungsformen beschränkt, sondern umfasst auch alle im Sinne der Erfindung gleichwirkenden Ausführungsformen. So lässt sich die Erfindung beispielsweise auch für mit Armierungsdrähten verstärkte Rohre oder Pipelines einsetzen. Die Darstellung der Erfindung unter besonderer Betonung einer Kabelabfangvorrichtung soll nicht bedeuten, dass die Abfangvorrichtung nur für die Anwendung auf Starkstromkabel eingeschränkt ist.

### Figurenbeschreibung

Weitere Einzelheiten und Vorteile der Erfindung werden mit einem bevorzugten Ausführungsbeispiel anhand von Figuren erläutert. Sie zeigen im Einzelnen
Figur 1: eine Schnittdarstellung der Abfangvorrichtung;
Figur 2: eine Schnittdarstellung einer temporären Abfangvorrichtung;
Figur 3: den Außenring;
Figur 4: den Kernring und
Figur 5: die Abstützmittel.

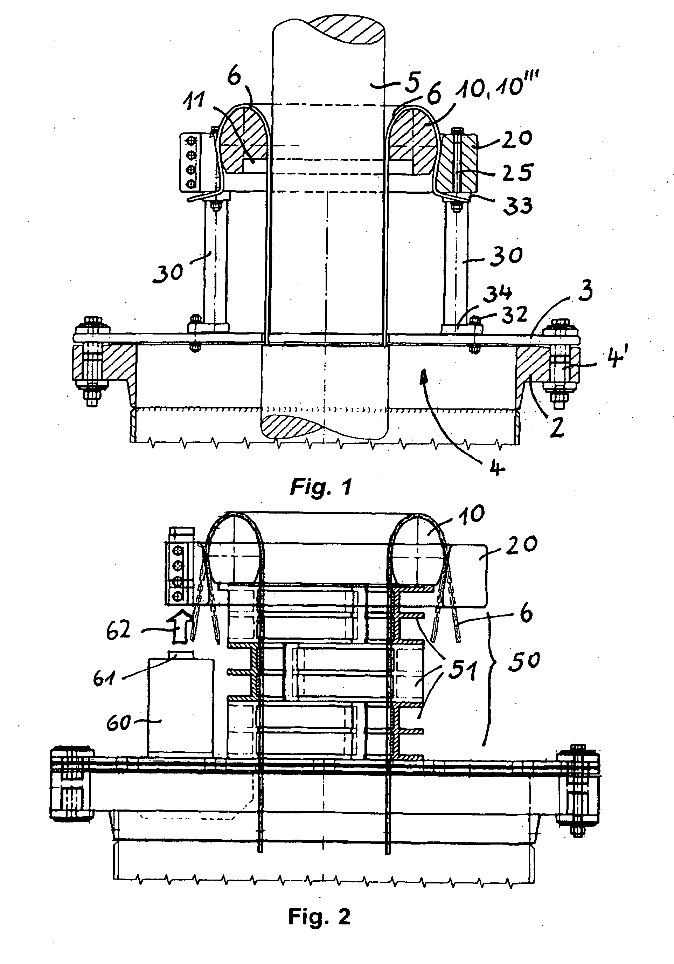

Die Fig. 1 zeigt eine Schnittdarstellung der permanenten Abfangvorrichtung und Fig. 2 eine Schnittdarstellung einer temporären Abfangvorrichtung. Die Eigenschaften und die Funktion der Abfangvorrichtung soll am Beispiel eines Starkstromkabels im folgenden beschrieben werden. Hierbei werden weiter vorhandene Aufbauelemente des Starkstromkabels, wie Kabeladern oder Kabelmantel nicht näher beschrieben.

Das Starkstromkabel, beispielsweise ein dreiadriges Seekabel 5, wird an der (freigelegten) Armierung 6 (an den Armierungsdrähten) mittels eines (nicht dargestellten und nicht näher beschriebenen) Ziehkopfs 'angefasst' und von unten durch die Öffnung der Plattform nach oben auf die waagerechte Plattform 2 gezogen und so gehalten. Das Starkstromkabel kann unterhalb der Öffnung in einem senkrecht verlaufenden Rohr geführt sein. Am Rand der Öffnung ist eine Grundplatte 3 verschraubt, die zur weiteren Befestigung der Abstützelemente 30 vorbereitete Bohrungen 4' enthält. In der Mitte der Grundplatte 3 befindet sich eine kreisförmige Bohrung 4 für den Durchtritt des Starkstromkabels.

In dieser Halteposition wird eine temporäre Klemmvorrichtung 50 angebracht (siehe Fig. 2). Diese besteht gemäß Fig. 2 aus drei Paar von Halbschalen 51, die um das Kabel im Bereich der freigelegten Armierung herumgelegt und an Verschraubungsflanschen fixiert werden. Die Halbschalen haben einen größeren Außendurchmesser als die Bohrung 4 in der Grundplatte 3, so dass bei Entlastung des gehaltenen Kabels die aus den Halbschalen gebildete temporäre Klemmvorrichtung auf die Grundplatte aufgesetzt werden kann. Die Last am Ziehkopf kann danach von der temporären Klemmvorrichtung 50 aufgenommen werden.

Diese temporäre Abfangung soll jedoch nur vorübergehend eingesetzt werden, weil ein Dauerdruck während des Betriebs des Kabels, der die Last des hängenden Starkstromkabels abfängt, zu irreversiblen Schäden im Mantel, an der Isolierung und an den Leitern des Starkstromkabels führen kann.

Im nächsten Schritt werden die vom Ziehkopf freigegebenen Armierungsdrähte 6 auf geeignete Länge gekürzt. Der aus drei Segmenten 10'" bestehende Kernring 10 wird kurz oberhalb der temporären Klemmvorrichtung um das Kabel gelegt. Der Kernring 10 hat einen etwas größeren Innendurchmesser als das Kabel im dortigen Bereich, eine Belastung oder Klemmung am Kabel findet nicht statt. Die Armierungsdrähte 6 werden nun über den elliptischen Querschnitt des Kernrings soweit gebogen, dass die Enden der Drähte wieder auf die Kabeloberfläche zeigen. Die Armierungsdrähte sind so weit plastisch verformbar, dass sie ganz um den Kernring (mit einem Winkel von mehr als 180°) herum gebogen werden und dort ohne weitere Haltemittel ihre Lage einnehmen.

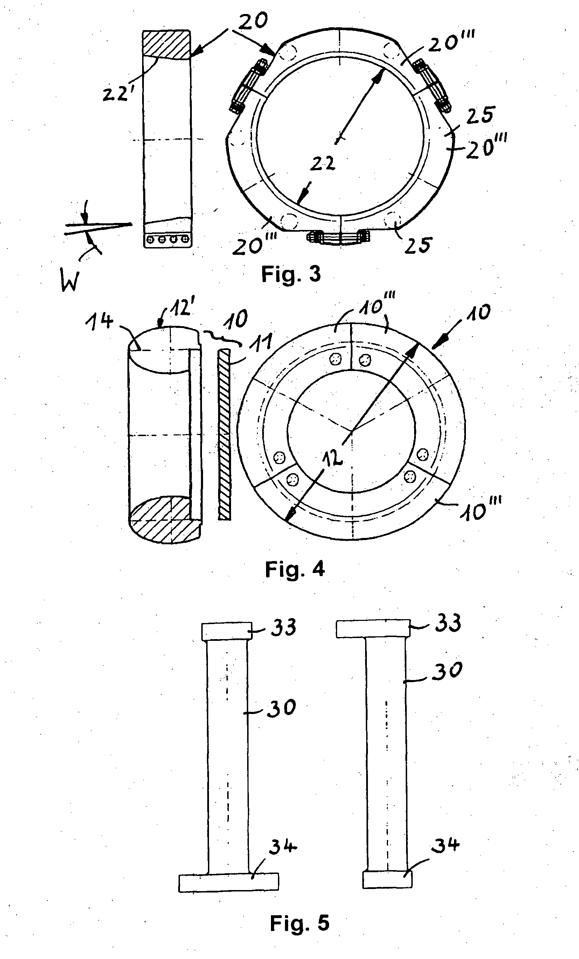

Nach dieser Vorbereitung wird eine geeignete Zahl von Hydraulikhebern (beispielsweise drei Wagenheber 60 mit Hebeleistung von ca. 10 Tonnen) auf der Grundplatte 3 positioniert. Auf den Hebestempeln 61 wird der Außenring 20 aufgelegt, der wie der Kernring 10 aus drei Segmenten 20'" besteht (vgl. Fig. 3). Bei der Montage ist darauf zu achten, dass die jeweiligen Teilungsflächen von Kern- und Außenring versetzt montiert werden.

Durch den Hebevorgang (62) der Hydraulikheber kommt es von unten zur Anlage und zur Klemmung der Innenfläche 22' des Außenrings mit den um den Kernring 10 herumgelegten und auf der konvexen Außenfläche 12' des Kernrings liegenden Armierungsdrähten 6. Das Anheben mittels Hydraulikheber geschieht nur auf einem Weg von wenigen Millimetern Hub, so dass die Last des Starkstromkabels voll von der Klemmung zwischen Außenring 20 und Kernring 10 aufgenommen ist. Die temporäre Klemmvorrichtung 50 ist entlastet, übernimmt keine Kräfte und kann somit entfernt werden.

Danach werden Abstützelemente in Form von mehreren (beispielsweise sechs) Fixiersäulen 30 von unten unter den Außenring 20 montiert. Der Außenring weist Bohrungen auf, die der Schraubverbindung (32) mit den kopfseitigen Flanschen 33 der Fixiersäulen dienen. Abschließend werden die Hydraulikheber abgesenkt, so dass die Schraublöcher an den Fußteilen 34 der Fixiersäulen 30 auf passende Bohrungen in der Grundplatte 3 zu liegen kommen. In dieser Lage werden die Fixiersäulen 30 mit der Grundplatte 3 verschraubt.

Der Einsatz der Fixiersäulen 30 kann vorgesehen sein, wenn nicht mit großen Querkräften zu rechnen ist. Für den Fall, dass höhere Querkräfte zu erwarten sind, kann der Einbau der Fixiersäulen mit weiteren Platten (oder Schalen) ergänzt werden, die zwischen den Fixiersäulen angeordnet sind. Dieses führt im Querschnitt zu einer Wabenstruktur, die dann hohe Querkräfte aufnehmen kann. Man kann jedoch auch von vornherein, statt der dargestellten Fixiersäulen großflächige, zylindrisch geformte Fixierplatten 51 einsetzen, um eine nachträgliche Verstärkung durch weitere Elemente zu vermeiden.

Die Last des hängenden Kabels übernimmt der Kernring 10 über die Armierungsdrähte 6, über den Außenring 20 und geht über auf die Fixiersäulen 30. Die Krafteinleitung mündet auf der Grundplatte 3, bzw. auf der Plattform 2. Der von den Armierungsdrähten 6 umschlungene Kernring 10 klemmt von der Zugkraft des Gegenstandes 5 verursacht, zugkraftabhängig die Armierungsdrähte 6 in der Innenfläche des Außenrings 20.

Die Hydraulikheber können entfernt werden. Zum Schutz der Kabelabfangvorrichtung kann eine Schutzhaube vorgesehen sein, die auf die Anordnung gelegt werden kann.

Die Figur 3 zeigt den Außenring in Schnitt und Aufsicht. Der Außenring 20 besteht aus drei gleichen Segmenten, die jeweils einen Kreissektor von 120° umfassen. Im Außenring liegen Bohrungen 25 zur Schraubbefestigung mit den Abstützmitteln (am kopfseitigen Flansch der Fixiersäulen). Die Fig. 3 zeigt noch den Winkel W. Die konische (kegelförmige) Aufweitung hat vorzugsweise einen Winkel von 10°. Der Konuswinkel ist das Doppelte des Winkels W, nämlich der zwischen den Mantellinien des Konus liegende Winkel.

Die Figur 4 zeigt den Kernring in Schnitt und Aufsicht. Der Kernring 10 ist wie der Außenring dreigeteilt ausgebaut. Der Kernring 10 ist bezüglich in seiner Ringebene zweiteilig konstruiert. Oberhalb der Ringebene besteht der Torus aus drei identischen Ringsegmenten. Unterhalb der Ringebene liegen drei Unterlegsegmente (Unterschraubelemente 11), die mit den Toruselementen verschraubbar sind. In der Abfangvorrichtung liegen Kernring und Außenring gegeneinander derart verdreht, dass die Segmentunterteilungen nicht übereinander zu liegen kommen. Der Kernringdurchmesser 12 ist größer als der Innendurchmesser 22 des Außenrings. Der Kernring kann durch den Außenring nicht hindurchrutschen.

Mit der Fig. 5 sind Abstützmittel in Form von Fixiersäulen dargestellt. Die Fixiersäulen 30 haben jeweils kopfseitige 33 und fußseitige Flansche 34 zur Verschraubung mit der Grundplatte oder mit der Plattform.

Zur Demontage des Starkstromkabels kommt der Vorteil der geringen Zahl von Einzelteilen ins Spiel, sowie die Tatsache, dass der Kernring ohne Befestigungsmittel in den Außenring eingelegt ist. Ähnlich wie bei der Montage wird das Starkstromkabel 5 mittels eines Ziehkopfs ,angefasst' und nach oben angehoben und gehalten. Die Klemmung zwischen Kernring 10 und Außenring 20 lockert und löst sich. Die Fixierelemente 30 und 51 können entfernt werden. Das Gewicht des Starkstromkabels kann an den nun freiliegenden Armierungsdrähten 6 wieder aufgenommen werden.

Vorzugsweise für den Einsatz in Meeresklima oder in anderer korrosiver Umgebung können alle Oberflächen der Abfangvorrichtung korrosionsgeschützt behandelt sein.

### Bezugszeichen

- 2: Plattform
- 3: Grundplatte
- 4: Öffnung, Bohrung in Grundplatte
- 4': Bohrungen für Abstützmittel
- 5: Gegenstand, Starkstromkabel
- 6: Armierungsschicht, Armierungsdrähte
- 10: erster Ring - Kernring mit elliptischem Querschnitt
- 10'": Aufbau in Form dreier Segmente
- 11: Unterlegsegmente
- 12: größter Außendurchmesser; Kernringdurchmesser
- 12': konvexe Außenfläche
- 14: Hauptachse Ellipse
- 20: zweiter Ring - Außenring
- 20'": Aufbau in Form dreier Segmente
- 22: Innenfläche, konisch nach oben sich öffnend
- W: Konuswinkel
- 25: Befestigungsschraube
- 30: Abstützmittel, Fixiersäule
- 32: Schraube am Fußende
- 33: kopfseitiger Flansch
- 34: fußseitiger Flansch
- 50: Hilfsklemmmittel, temporäre Abfangung
- 51: Fixierplatten oder -schalen
- 60: Hydraulikheber
- 61: Hebestempel
- 62: Hubrichtung

## Patentansprüche

1. Abfangvorrichtung für einen von unten durch eine Öffnung einer waagerechten Plattform (2) hindurchgeführten, mit einer aus Armierungselementen (6) bestehenden Armierungsschicht ausgebildeten langgestreckten Gegenstand (5), wobei die Abfangvorrichtung Klemmmittel (10, 20) für die Armierungsschicht (6) und Abstützmittel (30) zum Abstützen der Abfangvorrichtung auf der Plattform umfasst,
wobei
• die Klemmmittel einen in Umschlingung der Armierungselemente (6) aufnehmenden, den Gegenstand (5) umgebenden Kernring (10), und einen mit der Plattform (2) über die Abstützmittel (30) fest verbundenen, den Gegenstand (5) umgebenden Außenring (20) umfassen,
• und hierbei eine Innenfläche (22') des Außenrings (20) hin zur Außenfläche (12') des Kernrings (10) gerichtet ist,
• und die Armierungselemente (6) von der Innenfläche des Kernrings (10) kommend zur Außenfläche (12') des Kernrings (10) um den Kernring (10) herumgelegt sind,
**dadurch gekennzeichnet, dass**
eine zuglastabhängige Klemmung der Armierungselemente (6) zwischen der Außenfläche (12') des lose in den Außenring (20) eingelegten Kernrings (10) und der Innenfläche (22') des Außenrings (20) allein dadurch erfolgt, dass durch eine vom Gewicht des frei hängenden Gegenstandes (5) entwickelte Zugkraft Kernring (10) und Außenring (20) aufeinander gedrückt werden.

2. Abfangvorrichtung nach Anspruch 1, **dadurch gekennzeichnet, dass** eine Form der Innenfläche (22') des Außenrings (20) derart ausgebildet ist, dass der Kernring (10) in Zugrichtung des Gegenstandes (5) in den Außenring (20) einlegbar ist.

3. Abfangvorrichtung nach dem vorgehgehenden Anspruch, **dadurch gekennzeichnet, dass** die Innenfläche (22') des Außenrings (20) als Schale oder als Konus ausgebildet ist, wobei die Öffnung der Schale oder des Konus zu dem oberhalb der Plattform befindlichen Ende des Gegenstandes (5) weist.

4. Abfangvorrichtung nach dem vorgehgehenden Anspruch, **dadurch gekennzeichnet, dass** der Konuswinkel (W) in einem Winkelbereich zwischen 6° und 12° liegt.

5. Abfangvorrichtung nach einem der vorhergehenden Ansprüche, **dadurch gekennzeichnet, dass** der Kernring (10) als Torus mit einem elliptischen Querschnitt ausgebildet ist, wobei die Hauptachse (14) der Ellipse parallel zur Achse des Gegenstands (5) liegt.

6. Abfangvorrichtung nach einem der vorhergehenden Ansprüche, **dadurch gekennzeichnet, dass** der Außenring (20) Bohrungen aufweist zur Schraubbefestigung (25) mit den Abstützmitteln (30).

7. Abfangvorrichtung nach einem der vorhergehenden Ansprüche, **dadurch gekennzeichnet, dass** die jeweiligen Ringe (10, 20) aus mindestens zwei gleichen Segment-Elementen (10'", 11, 20"') gebildet sind.

8. Abfangvorrichtung nach einem der vorhergehenden Ansprüche, **dadurch gekennzeichnet, dass** auf der Öffnung der Plattform (2) eine mit einer Bohrung (4) für den Durchtritt des Gegenstandes versehene Grundplatte (3) befestigt ist.

9. Abfangvorrichtung nach dem vorhergehenden Anspruch, **dadurch gekennzeichnet, dass** die Grundplatte (3) Bohrungen (4') aufweist für die Schraubbefestigung (32) mit den Abstützmitteln (30).

10. Abfangvorrichtung nach einem der vorhergehenden Ansprüche, **dadurch gekennzeichnet, dass** die Abstützmittel in Form mehrerer Fixiersäulen (30) oder Fixierplatten (51) ausgebildet sind.

## Claims

1. Supporting device for an elongate object (5) which is constructed so as to have a reinforcement layer which comprises reinforcement elements (6) and which extends from below through an opening of a horizontal platform (2), the supporting device comprising clamping means (10, 20) for the reinforcement layer (6) and support means (30) for supporting the supporting device on the platform,
• the clamping means comprising a core ring (10) which receives the reinforcement elements (6) in a wrapping manner and which surrounds the object (5), and an outer ring (20) which is securely connected to the platform (2) by means of the support means (30) and which surrounds the object (5),
• and an inner face (22') of the outer ring (20) being directed towards the outer face (12') of the core ring (10) in this instance,
• and the reinforcement elements (6) being placed around the core ring (10) starting from the inner face of the core ring (10) in the direction towards the outer face (12') of the core ring (10),
**characterised in that**
a tensile-load-dependent clamping of the reinforcement elements (6) between the outer face (12') of the core ring (10) which is loosely placed in the outer ring (20) and the inner face (22') of the outer ring (20) is carried out only by the core ring (10) and outer ring (20) being pressed against each other by means of a tensile force developed by the weight of the freely suspended object (5).

2. Supporting device according to claim 1, **characterised in that** a shape of the inner face (22') of the outer ring (20) is constructed in such a manner that the core ring (10) can be placed in the outer ring (20) in the pulling direction of the object (5).

3. Supporting device according to the preceding claim, **characterised in that** the inner face (22') of the outer ring (20) is constructed as a shell or a cone, the opening of the shell or cone being directed towards the end of the object (5) located above the platform.

4. Supporting device according to the preceding claim, **characterised in that** the cone angle (W) is in an angular range between 6° and 12°.

5. Supporting device according to any one of the preceding claims, **characterised in that** the core ring (10) is constructed as a torus with an elliptical cross-section, the main axis (14) of the ellipse being located parallel with the axis of the object (5).

6. Supporting device according to any one of the preceding claims, **characterised in that** the outer ring (20) has holes for screw fixing (25) with respect to the support means (30).

7. Supporting device according to any one of the preceding claims, **characterised in that** the respective rings (10, 20) are formed from at least two identical segment elements (10"', 11, 20"').

8. Supporting device according to any one of the preceding claims, **characterised in that** a base plate (3) provided with a hole (4) for the passage of the object is fixed on the opening of the platform (2).

9. Supporting device according to the preceding claim, **characterised in that** the base plate (3) has holes (4') for screw fixing (32) with respect to the support means (30).

10. Supporting device according to any one of the preceding claims, **characterised in that** the support means are constructed in the form of a plurality of fixing columns (30) or fixing plates (51).

## Revendications

1. Dispositif de retenue pour un objet (5) allongé pourvu d'une couche d'armature consistant en des éléments de blindage (6) et introduit par le bas dans une ouverture d'une plate-forme (2) horizontale, dans lequel le dispositif de retenue comprend des moyens de serrage (10, 20) pour la couche d'armature (6) et des moyens d'étaiement (30) permettant d'étayer le dispositif de retenue sur la plate-forme,
dans lequel :
• les moyens de serrage comprennent une bague centrale (10) qui reçoit les éléments de blindage (6) en les enserrant et qui entoure l'objet (5), et une bague extérieure (20) qui entoure l'objet (5) en étant fermement liée à la plate-forme (2) par le biais des moyens d'étaiement (30),
• et une surface intérieure (22') de la bague extérieure (20) est ainsi tournée vers la surface extérieure (12') de la bague centrale (10),
• et les éléments de blindage (6) viennent envelopper la bague centrale (10) en partant de la surface intérieure de la bague centrale (10) vers la surface extérieure (12') de la bague centrale (10),
**caractérisé en ce que**
un serrage fonction de la traction ne se produit sur les éléments de blindage (6), entre la surface extérieure (12') de la bague centrale (10), disposée librement dans la bague extérieure (20), et la surface intérieure (22') de la bague extérieure (20) que du fait de la pression, l'une contre l'autre, de la bague centrale (10) et de la bague extérieure (20) sous l'effet de la traction développée par le poids de l'objet (5) librement suspendu.

2. Dispositif de retenue selon la revendication 1, **caractérisé en ce que** la forme de la surface intérieure (22') de la bague extérieure (20) est étudiée de manière que la bague centrale (10) puisse être disposée dans la bague extérieure (20) dans le sens de la traction de l'objet (5).

3. Dispositif de retenue selon la revendication précédente, **caractérisé en ce que** la surface intérieure (22') de la bague extérieure (20) est conçue sous la forme d'une coupe ou d'un cône, l'ouverture de la coupe ou du cône étant dirigée vers l'extrémité de l'objet (5) qui se trouve au-dessus de la plate-forme.

4. Dispositif de retenue selon la revendication précédente, **caractérisé en ce que** l'angle de conicité (W) est compris dans la plage angulaire de 6° à 12°.

5. Dispositif de retenue selon l'une quelconque des revendications précédentes, **caractérisé en ce que** la bague centrale (10) est conçue sous la forme d'un tore de section transversale elliptique, l'axe principal (14) de l'ellipse étant parallèle à l'axe de l'objet (5).

6. Dispositif de retenue selon l'une quelconque des revendications précédentes, **caractérisé en ce que** la bague extérieure (20) présente des trous permettant une fixation par vissage (25) aux moyens d'étaiement (30).

7. Dispositif de retenue selon l'une quelconque des revendications précédentes, **caractérisé en ce que** les bagues (10, 20) respectives se composent d'au moins deux éléments de segments identiques (10"', 11, 20"').

8. Dispositif de retenue selon l'une quelconque des revendications précédentes, **caractérisé en ce qu'**une plaque d'embase (3) pourvue de trous (4) pour le passage de l'objet est fixée sur l'ouverture de la plate-forme (2).

9. Dispositif de retenue selon la revendication précédente, **caractérisé en ce que** la plaque d'embase (3) présente des trous (4') pour la fixation par vissage (32) aux moyens d'étaiement (30).

10. Dispositif de retenue selon l'une des revendications précédentes, **caractérisé en ce que** les moyens d'étaiement sont conçus sous la forme de plusieurs colonnes de fixation (30) ou plaques de fixation (51).
